**Europäisches Patentamt**

**European Patent Office**

**Office européen des brevets**

(11) Numéro de publication : **0 352 171 B1**

# (12) FASCICULE DE BREVET EUROPEEN

(45) Date de publication du fascicule du brevet :
08.07.92 Bulletin 92/28

(21) Numéro de dépôt : **89402000.7**

(22) Date de dépôt : **12.07.89**

(51) Int. Cl.⁵ : **F02K 1/70**

(54) **Inverseur de poussée de turboréacteur à double flux équipé de bords de déviation mobiles.**

(30) Priorité : **18.07.88 FR 8809671**

(43) Date de publication de la demande :
**24.01.90 Bulletin 90/04**

(45) Mention de la délivrance du brevet :
**08.07.92 Bulletin 92/28**

(84) Etats contractants désignés :
**DE FR GB**

(56) Documents cités :
**DE-A- 1 930 829**
**US-A- 3 612 401**

(73) Titulaire : **HISPANO-SUIZA Société anonyme dite:**
**333, Bureaux de la Colline**
**F-92213 Saint Cloud (FR)**

(72) Inventeur : **Vauchel Guy, Bernard**
**316 Rue Pierre Mendès France**
**F-76610 Le Havre (FR)**

(74) Mandataire : **Moinat, François**
**S.N.E.C.M.A. Service des Brevets Boîte Postale 81**
**F-91003 Evry Cédex (FR)**

EP 0 352 171 B1

## Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

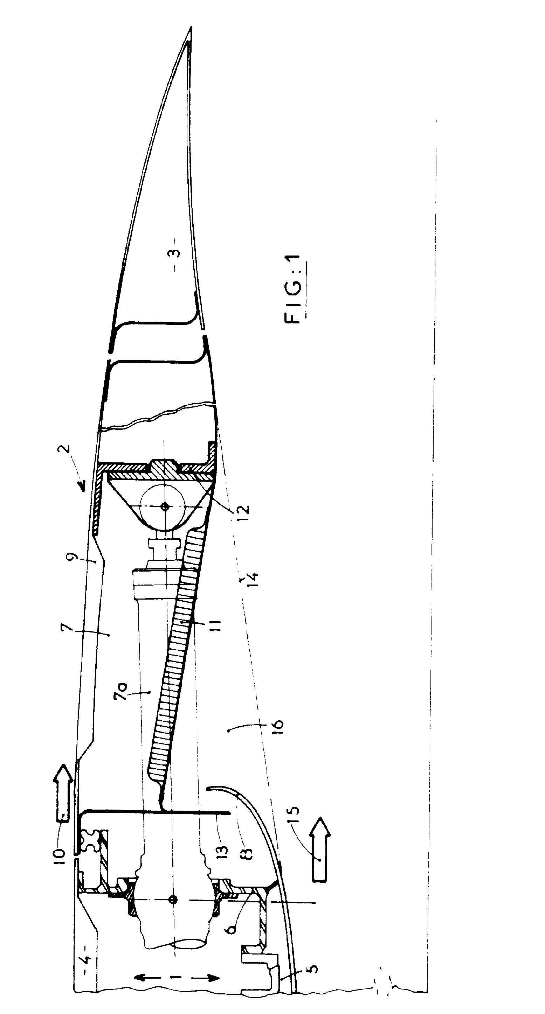

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

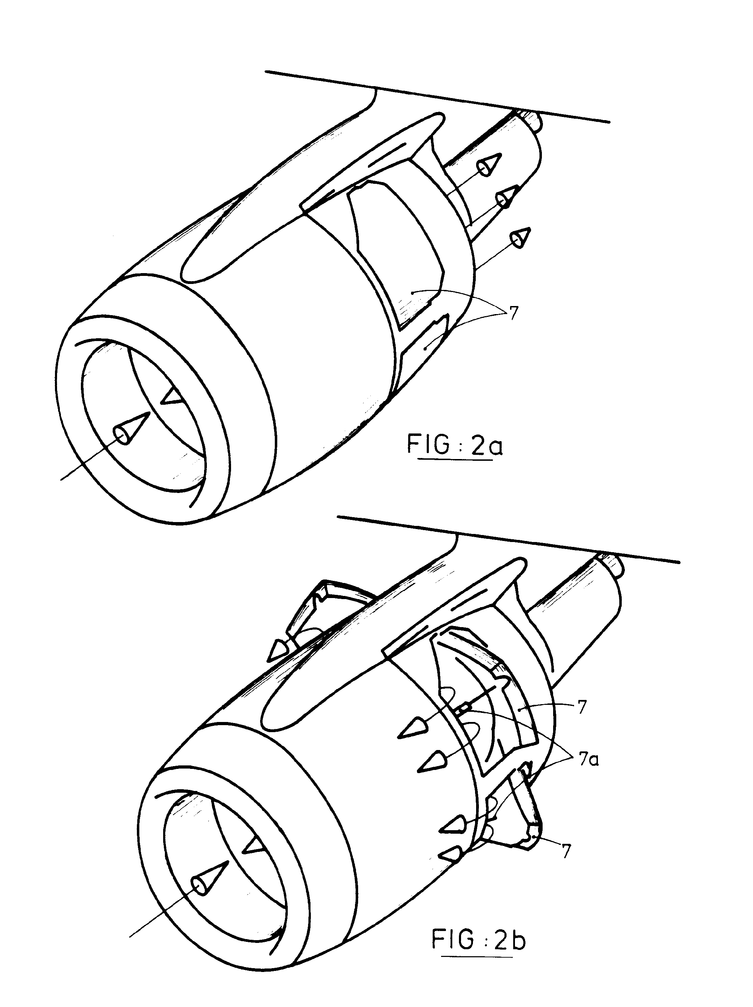

Les figures 2a et 2b montrent, selon une vue schématique en perspective un exemple d'application d'un tel inverseur de poussée à un turboréacteur à double flux, l'inverseur comportant dans ce cas quatre portes 7 et les figures 2a et 2b montrant lesdites portes 7, respectivement fermées et ouvertes, correspondant à un fonctionnement en poussée directe et en inversion de poussée. Chaque porte 7 est associée à un moyen de commande des déplacements tels qu'un vérin 7a.

En aval, amont et aval étant définis par rapport au sens normal de circulation des gaz en poussée directe, la partie fixe 1 se termine par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position jet direct dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur 13 constitué d'une partie frontale associée ou non à des parties latérales. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur 13 de porte et par le bord de déviation 8 de la partie fixe amont 1, du côté externe, par la partie avant du panneau interne 11 de porte et du côté radialement interne, par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisation du type d'inverseur de poussée de turboréacteur à portes basculantes sont décrits notamment par FR-A 2 486 153, FR-A 2 506 843 et FR-A 2 559 838. Aucune solution pleinement satisfaisante n'a toutefois été proposée pour une amélioration du profil de veine correspondant à une enveloppe aérodynamique de veine correcte en fonctionnement de poussée directe. Notamment une solution tendant à réduire le volume de la cavité 16 décrite ci-dessus en référence à la figure 1 en rapprochant la face interne de la partie avant du panneau interne 11 de la porte 7 de la ligne théorique 14 au moyen d'une réduction de la longueur du déflecteur 13 de porte a pour conséquence de réduire l'efficacité lors du fonctionnement en invension de poussée, ce qui peut devenir inacceptable. Une autre solution, décrite par FR 2 618 853 propose d'annuler, ou tout au moins de réduire considérablement, la cavité 16 tout en conservant, en position d'inversion de poussée, un déflecteur 13 de longueur suffisante pour obtenir les performances requises. La mise en oeuvre d'une telle solution doit cependant conduire à des aménagements relativement complexes et impose des mises au point sur un ensemble mobile devant remplir plusieurs fonctions déterminées qui est la porte d'inverseur.

On connaît également par DE-A-1 930 829 un inverseur de poussée comprenant un carter pourvu d'une pluralité de volets d'inversion de poussée susceptibles de dégager un espace périphérique sur le bord amont duquel sont disposés des éléments courbes. Chaque élément courbe glisse sur des rails en translation longitudinale entre une position active formant une surface d'écoulement aérodynamique et une position escamotée dans l'espace formé entre les parois du carter et il est relié par une entretoise à un volet d'inversion de poussée. Par suite, le but de l'invention est d'apporter une solution à ces problèmes en conciliant les facilités de mise en oeuvre, tenant compte des impératifs de masse minimale et de coût réduit, avec l'obtention des performances requises, aussi bien lors du fonctionnement en poussée directe, sans pertes aérodynamiques, que lors du fonctionnement en inversion de poussée.

Ces buts sont atteints, conformément à l'invention, par un inverseur de poussée du type précité à obstacles susceptibles de dévier le flux secondaire d'un turboréacteur à double flux caractérisé en ce que le bord de déviation est relié au cadre avant de structure fixe de l'inverseur par des moyens déplaçables qui lui laissent un seul degré de liberté et est associé à des moyens articulés de liaison au vérin de déplacement de la partie mobile de l'inverseur, de manière à occuper deux positions remarquables de fonctionnement, une première position dans laquelle, en coopération avec ledit panneau interne de partie fixe amont de l'inverseur, il assure, lors d'un fonctionnement en poussée directe, l'enveloppe aérodymamique externe du flux direct et une seconde position dans laquelle, en coopération avec les obstacles ou portes mobiles, il forme le puits d'inversion, délimitant l'enveloppe du flux inversé, lors d'un fonctionnement en inversion de poussée, assurant dans tous les cas un profil aérodynamique optimal de veine.

Avantageusement, les bords de déviation peuvent être divisés en segments, les uns menants et les autres menés.

Un segment menant articulé sur un support solidaire du cadre avant de la partie fixe amont de l'inverseur est relié par des moyens articulés à bielle et levier au corps du vérin de commande des déplacements de la partie mobile de l'inverseur et un segment mené articulé de manière similaire est relié par une biellette articulée à un élément en forme de potence solidaire d'un segment menant.

Selon un autre mode avantageux de réalisation de l'invention, le bord de déviation est relié à la partie fixe amont de l'inverseur par des moyens à glissière/support-guide et ressort et au corps du vérin de commande des déplacements de la partie mobile de l'inverseur par au moins une bielle articulée reliée à une came articulée sur un pivot solidaire de la partie fixe amont de l'inverseur et coopérant avec un galet solidaire du bord de déviation.

En passant d'une position correspondant au fonctionnement en jet direct où le bord de déviation assure une délimitation externe aérodynamique continue de la paroi de veine du flux froid secondaire du turboréacteur, soit par pivotement en rotation, soit par translation en direction radiale par rapport à l'axe géométrique de l'inverseur, à une position correspondant au fonctionnement en inverseur de poussée où le bord de déviation forme avec les obstacles ou portes d'inverseur le puits d'inversion de manière à assurer les performances d'inversion et, dans tous les cas, une paroi de veine aérodynamiquement profilée de manière adéquate.

D'autres caractéristiques et avantages de l'invention seront mieux compris à la lecture de la description qui va suivre des modes de réalisation de l'invention, en référence aux dessins annexés sur lesquels :

– la figure 1 représente une demi-vue schématique, en coupe longitudinale par un plan passant par l'axe de rotation d'un turboréacteur, d'un inverseur de poussée à portes basculantes, en position fermée, d'un type connu et qui a fait précédemment l'objet d'une description ;

– les figures 2a et 2b représentent deux vues schématiques en perspective de l'inverseur de poussée représenté à la figure 1, monté sur un turboréacteur et montré respectivement en position fermée et en position déployée ;

– la figure 3 représente une demi-vue schématique partielle en coupe longitudinale, suivant la ligne III-III de la figure 5, par un plan passant par l'axe de rotation du turboréacteur, analogue à celle de la figure 1, d'un inverseur de poussée suivant un mode de réalisation conforme à l'invention, dans une position déployée correspondant à un fonctionnement en inversion de poussée ;

– la figure 4 représente, dans une vue analogue à celle de la figure 3, la partie d'inverseur de poussée représentée sur la figure 3, dans une position fermée correspondant à un fonctionnement en poussée directe ;

– la figure 5 représente, selon une vue de l'arrière de la figure 4, selon la flèche F, la partie d'inverseur de poussée représentée sur la figure 4 ;

– la figure 6 représente, dans une vue analogue à celle de la figure 5, une partie d'inverseur de poussée périphériquement adjacente à la partie représentée sur la figure 5, la position fermée, en fonctionnement de poussée directe, étant représentée en traits continus et la position ouverte, en fonctionnement d'inversion de poussée, étant représentée en traits interrompus ;

– la figure 7 représente, selon une vue en section suivant la ligne VII-VII, la partie d'inverseur de poussée représentée sur la figure 6, la position fermée, en fonctionnement de poussée directe, étant représentée en traits continus et la position ouverte, en fonctionnement d'inversion de poussée, étant représentée en traits interrompus ;

– la figure 8 représente une demi-vue schématique partielle en coupe longitudinale, suivant la ligne VIII-VIII de la figure 10, par un plan passant par l'axe de rotation du turboréacteur, analogue à celle des figures 1 et 3, d'un inverseur de poussée suivant un autre mode de réalisation conforme à l'invention, dans une position déployée, correspondant à un fonctionnement en inversion de poussée ;

– la figure 9 représente, dans une vue analogue à celle de la figure 8, la partie d'inverseur de poussée représentée sur la figure 8, dans une position fermée correspondant à un fonctionement en poussée directe ;

– la figure 10 représente, selon une vue en coupe suivant la ligne X-X de la figure 9, la partie d'inverseur de poussée représentée sur la figure 9 ;

– la figure 11 représente, selon une vue en section suivant la ligne XI-XI de la figure 10, la partie d'inverseur de poussée représentée aux figures 9 et 10.

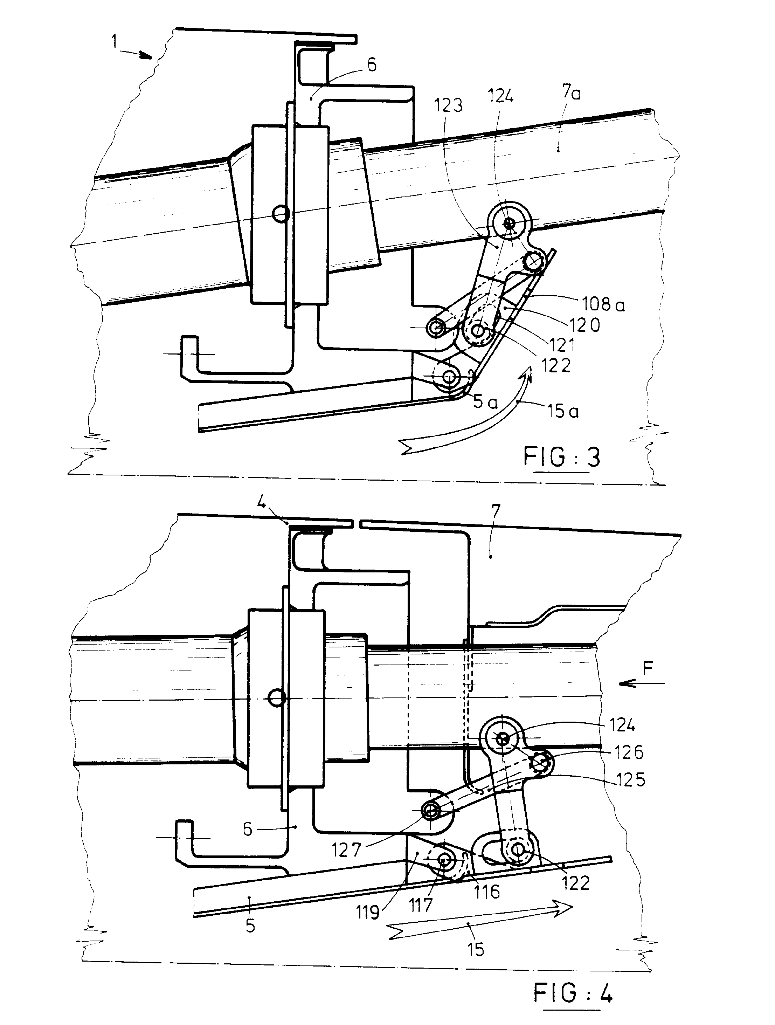

L'inverseur de poussée de turboréacteur à double flux représenté sur les figures 3 à 7, dans un mode de réalisation conforme à l'invention, comporte les ensembles principaux et éléments qui ont été précédemment décrits, en référence aux figures 1, 2a et 2b, dans un exemple connu de réalisation et on conservera pour des éléments identiques ou correspondants les mêmes références de désignation, les éléments propres au présent mode de réalisation de l'invention étant affectés d'une référence augmentée d'une centaine. L'inverseur de poussée comporte ainsi notamment la partie fixe amont 1 composée du panneau externe 4 de nacelle, du panneau interne 5 délimitant extérieurement la veine du flux secondaires représenté par la flèche 15, panneau dont l'extrémité aval se termine par un rebord 5a. Lesdits panneaux 4 et 5 sont supportés par un cadre avant 6 qui sert également de support au vérin 7a de commande des déplacements de la porte 7.

Conformément à l'invention, ledit panneau interne 5 est prolongé en aval du cadre avant 6 par un élément mobile constituant un bord de déviation 108.

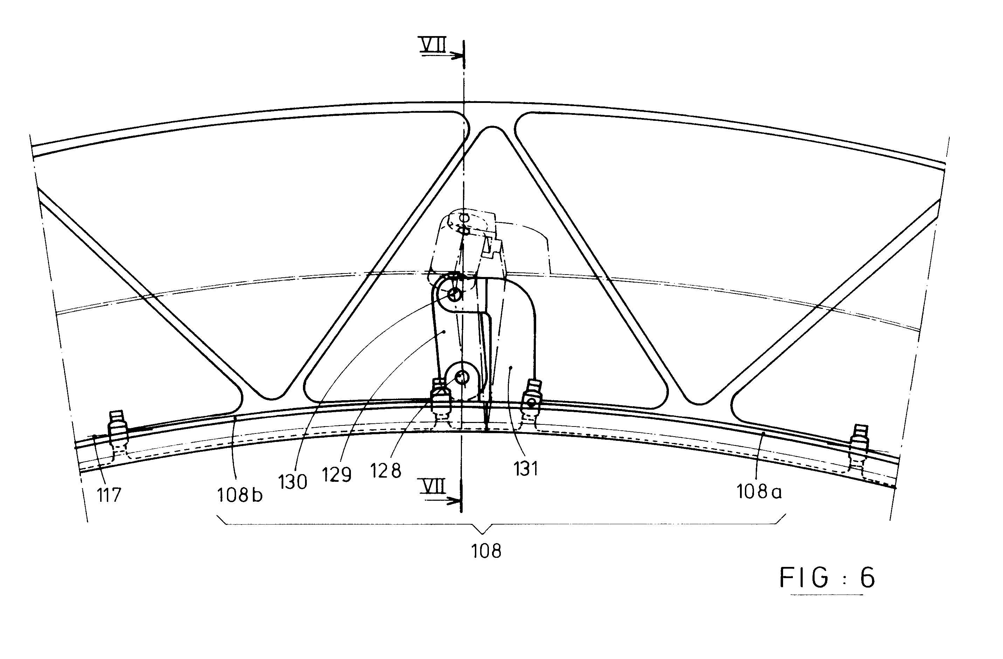

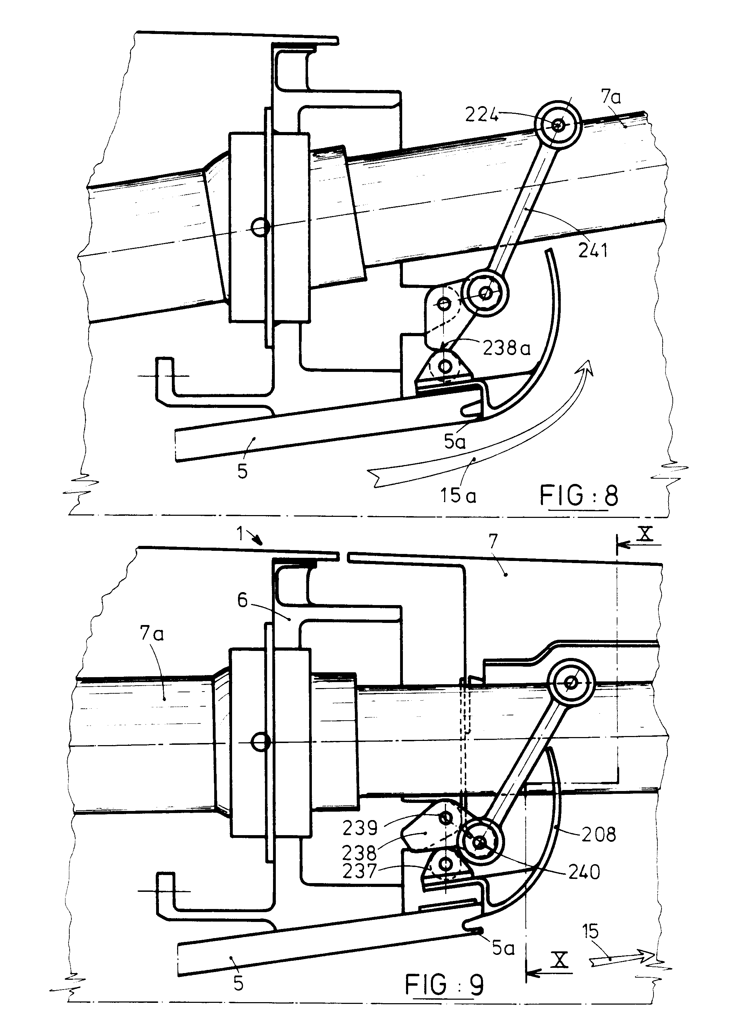

Selon le mode de réalisation représenter sur les figures 3 à 7, le bord de déviation 108 est divisé en segments, les uns menants 108a et les autres menés 108b. La mise en place et le fonctionnement d'un segment menant 108a sont représentés sur les figures 3 à 5 tandis que la mise en place et le fonctionnement d'un segment mené 108b relié au segment menant 108a sont représentés sur les figures 6 et 7. Chaque segment menant 108a est solidaire d'un support 116 dont l'extrémité est articulée au moyen d'un axe 117 sur une chape 118 à l'extrémité d'un support fixe 119 solidaire du cadre avant 6 de la partie fixe amont 1 de l'inverseur.

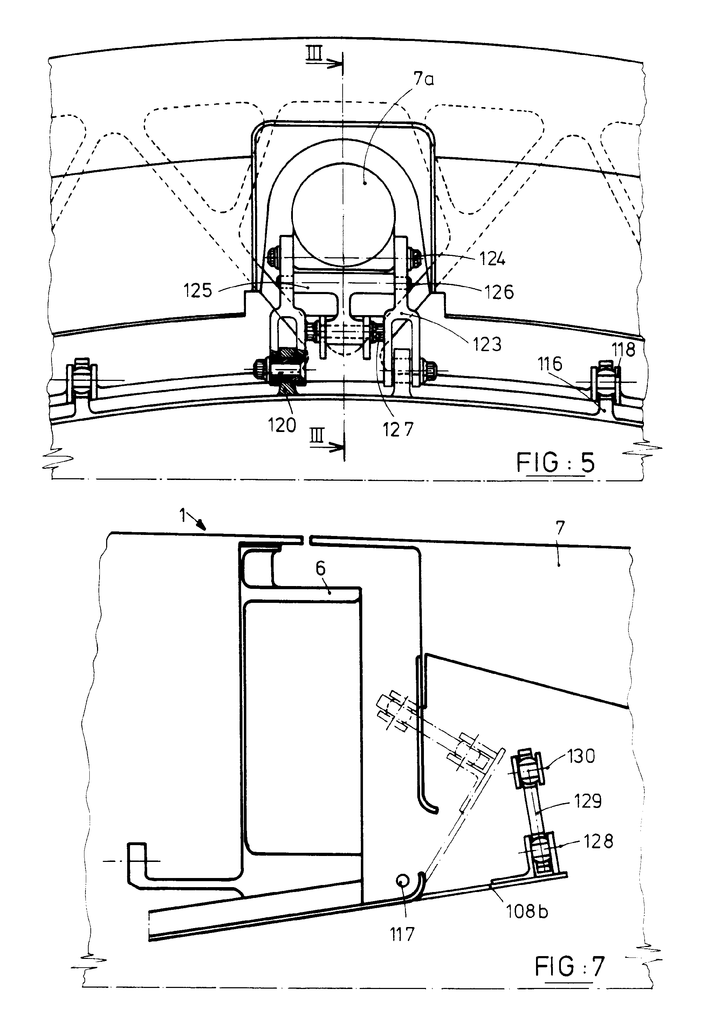

Dans le mode de réalisation représenté, chaque segment menant 108a comporte deux tels supports 116, comme visible sur la figure 5. Sur la face radialement externe du segment menant 108a est ménagé au moins un logement 120 présentant une rainure 121, orientée suivant une direction longitudinale, par rapport à l'axe de l'inverseur. Ladite rainure 121 coopère avec un galet 122 porté à l'extrémité d'une bielle 123 dont l'autre extrémité est articulée sur un pivot 124 porté par le corps du vérin 7a de manoeuvre de la porte 7 d'inverseur. Dans le mode de réalisation représenté et comme visible sur la figure 5, chaque segment menant 108a est relié par deux bielles 123 au vérin 7a.

Un levier 125 articulé à une extrémité 126 sur ladite bielle 123 la relie à la partie fixe amont 1 de l'inverseur par une articulation 127 placée à son autre extrémité. Un seul levier 125 par segment menant 108a peut être associé à deux bielles 123, comme dans le mode de réalisation représenté sur la figure 5. Chaque segment mené 108b, adjacent à un segment menant 108a, est supporté par la partie fixe amont 1 de l'inverseur, de manière similaire, par des articulations 117 entre supports. Le segment 108b porte un pivot 128 où s'articule l'extrémité d'une biellette 129 dont l'autre extrémité est articulée sur un pivot 130 porté par un élément en forme de potence 131 qui est solidaire du segment menant 108a.

La position des différentes articulations et notamment 128 est déterminée de manière à assurer une continuité aérodynamique des profils des segments menants 108a et menés 108b, notamment dans une position correspondant au fonctionnement en poussée directe, dans laquelle, comme représenté sur les figures 4 et 7, le bord de déviation à segments mobiles 108a et 108b se raccorde à l'extrémité aval du panneau interne 5 de la partie fixe amont de l'inverseur, assurant une paroi externe de veine aérodynamiquement continue. Les perturbations d'écoulement provenant du bord de déviation 8 dans les solutions antérieures telles que représentées à la figure 1 sont ainsi évitées grâce à l'invention ainsi que les pertes de poussée qui en résulteraient. De même, pour passer en position de fonctionnement en inversion de poussée, représentée à la figure 3, l'ouverture de la porte 7 est obtenue par le pivotement du vérin 7a de commande qui entraîne dans son mouvement le pivotement rotatif du segment menant 108a autour de ses axes 117, par l'intermédiaire des bielles articulées 123 et du levier articulé 125. Pendant le même temps, le segment menant 108a entraîne le segment mené 108b de la même manière dans un mouvement de pivotement rotatif autour des axes 117, par l'intermédiaire de la biellette 129 articulée sur la potence 131. Le segment mené 108b passe ainsi de la position tracée en traits continus de poussée directe à la position d'inversion de poussée, tracée en traits interrompus sur les figures 6 et 7. Les bords de déviation à segments 108a et 108b délimitent ainsi avec les portes 7 les puits d'inversion en assurant un profil optimal des parois de veine en vue de garantir les performances d'inversion du flux représenté par la flèche 15a.

La mobilité du bord de déviation 8, dont la foncion principale dans les solutions antérieures, dont la figure 1 montre un exemple de réalisation, est de guider le flux inversé lors d'un fonctionnement en inversion de poussée et doit être conservée, visant, selon l'invention, à éviter des pertes aérodynamiques en fonctionnement de poussée directe, et qui est obtenue par les moyens qui viennent d'être décrits, selon un premier mode de réalisation, en référence aux figures 3 à 7, peut être obtenue par des moyens différents, notamment selon un autre mode de réalisation de l'invention représenté sur les figures 8 à 11.

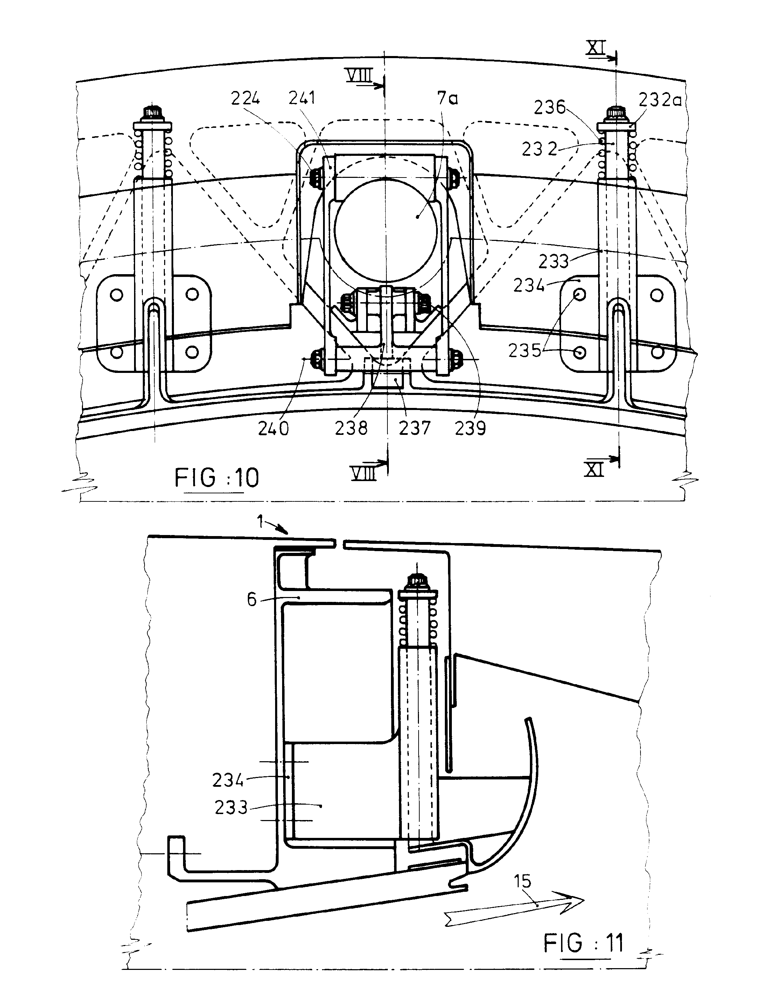

Le bord de déviation 208 est solidaire de glissières 232, par exemple au nombre de deux dans le mode de réalisation représenté sur les figures 10 et 11, qui coopèrent avec des supports-guides 233 solidarisés avec le cadre avant 6 de la partie fixe amont 1 de l'inverseur, chacun au moyen d'une plaque 234 et de tout moyen de fixation, tels que vis ou rivets 235. Lesdites glissières 232 comportent à leur extrémité une collerette 232a et un ressort 236 est monté en précontrainte entre ladite collerette 232a et l'extrémité coopérante du support-guide 233. Le bord de déviation 208 porte également sur sa face radialement externe un galet 237 susceptible de coopérer avec une came 238 articulée sur un pivot 239 solidaire de la partie fixe amont 1 de l'inverseur. Ladite came 238 est solidaire d'au moins une articulation 240, dédoublée dans le présent mode de réalisation, comme visible sur la figure 10, où s'articulent deux bielles 241 dont l'autre extrémité est articulée sur un pivot 224 porté par le corps du vérin 7a de manoeuvre de la porte 7 de l'inverseur.

Le fonctionnement est similaire à celui qui a été décrit en référence aux figures 3 à 7 pour le premier mode de réalisation de l'invention. En effet, à nouveau, lors d'un fonctionnement en poussée directe, la position occupée par le bord de déviation 208, telle qu'elle est représentée sur les figures 9 à 11, évite toute perturbation susceptible d'apparaître au niveau de la paroi radialement externe de délimitation de la veine du flux secondaire, symbolisé par la flèche 15. Dans cette position, la came 238 est éclipsée par rapport au galet 237 par suite de son pivotement autour du pivot 239 sous l'influence de la bielle 241 qui maintient l'articulation 240 dans sa position. Par suite sous l'action des ressorts 236 coopérant avec les glissières 232, le bord de déviation 208 occupe une position radialement écartée de l'axe de l'inverseur, position où il dégage une lèvre 5a qui assure le redressement du flux 15 à l'extrémité aval du panneau interne 5 de la partie fixe amont 1 de l'inverseur. Pour passer à un fonctionnement en inversion de poussée, par contre, le déplacement du vérin 7a ouvrant la porte 7 d'inverseur entraîne le pivotement de la came 238 par l'intermédiaire de la bielle 241. La rampe 238a ménagée sur ladite came 238 vient de cette manière appuyer sur le galet 237 et comprimant les ressorts 236 déplace en translation radiale le bord de déviation 208 qui masque ladite lèvre 5a obligeant le flux dévié 15a à suivre ainsi le profil du bord de déviation 208, assurant les performances d'inversion recherchées.

**Revendications**

1. Inverseur de poussée de turboréacteur à double flux comportant une partie amont (1) dont la partie radialement interne est prolongée vers l'aval par un bord de déviation et une partie mobile comportant des obstacles de déviation, notamment des portes basculantes (7) susceptibles en position fermée de s'intégrer dans la paroi extérieure du canal annulaire du flux secondaire, et, en position déployée, de dévier ledit flux secondaire, chaque porte (7) étant directement reliée à un vérin (7a) de commande des déplacements, ledit bord de déviation étant placé en permanence aval d'un cadre avant (6) de liaison entre un panneau externe (4) et un panneau interne (5) de ladite partie fixe amont (1) caractérisé en ce que ledit bord de déviation (108,208) est relié audit cadre avant (6) de structure fixe de l'inverseur par des moyens déplaçables (116 ; 232) qui lui laissent un seul degré de liberté et est associé à des moyens mobiles et articulés de liaison (122-125; 237-241) au vérin (7a) de déplacement de la partie mobile de l'inverseur.

2. Inverseur de poussée selon la revendication 1 dans lequel ledit bord de déviation (108) est porté par au moins deux supports mobiles (116), chacun articulé sur un support fixe (119) qui est solidaire du cadre avant (6) de la partie fixe amont (1) de l'inverseur.

3. Inverseur de poussée selon l'une des revendications 1 ou 2 dans lequel lesdits moyens articulés de liaison comprennent au moins une bielle (123) articulée sur le corps du vérin (7a) de commande des déplacements de la partie mobile de l'inverseur et un levier (125) articulé à une extrémité sur la structure fixe amont (1) de l'inverseur et à l'autre extrémité sur ladite bielle (123).

4. Inverseur de poussée selon la revendication 3 dans lequel une extrémité de ladite bielle (123) porte un galet (122) coopérant avec une rainure (121) ménagée sur ledit bord de déviation.

5. Inverseur de poussée selon l'une quelconque des revendications 1 à 4 dans lequel le bord de déviation (108) comporte au moins un segment menant (108a) et au moins un segment mené (108b).

6. Inverseur de poussée selon la revendication 5 dans lequel chaque segment mené (108b) est porté par au moins deux supports mobile (116), chacun articulé sur un support fixe (119) qui est solidaire du cadre avant (6) de la partie fixe amont (1) de l'inverseur et est relié par une biellette (129), articulée à chaque extrémité, à un élément en forme de potence (131) solidaire d'un segment menant adjacent (108a).

7. Inverseur de poussée selon la revendication 1 dans lequel ledit bord de déviation comporte au moins deux glissières mobiles (232) coopérant chacune avec un support-guide (233) fixe qui est solidaire de la partie fixe amont (1) de l'inverseur, ladite glissière (232) comportant à son extrémité une collerette (232a) d'appui pour un ressort (236) interposé entre ladite collerette (232a) et l'extrémité dudit support-guide (233).

8. Inverseur de poussée selon la revendication 7 dans lequel lesdits moyens articulés de liaison comprennent au moins une bielle (241) articulée, à une extrémité, sur le corps du vérin (7a) de commande des déplacements de la partie mobile de l'inverseur et une came (238) articulée sur un pivot (239) solidaire de la partie fixe amont (1) de l'inverseur et solidaire d'une articulation (240) coopérant avec l'autre extrémité de ladite bielle (241), ladite came mobile (238) coopérant avec un galet (237) solidaire du bord de déviation (208).

**Patentansprüche**

1. Schubumkehrvorrichtung für ein Zweikreis-Turobtriebwerk mit einem stromaufwärtigen Teil (1), dessen radial innerer Teil zur stromabwärtigen Seite hin von einem Strömungsleitrand und einem beweglichen Teil mit Strömungsleithindernissen, insbesondere schwenkbaren Klappen, verlängert wird, die sich in geschlossener Position in die Außenwand des ringförmigen Sekundärkreiskanals einfügen und in ausgebreiteter Position den Sekundärkreis umlenken können, wobei jede Klappe (7) direkt mit einem Antriebszylinder (7a) für ihren Bewegungsantrieb verbunden ist, und wobei der Strömungsleitrand sich ständig stromabwärts eines vorderen Rahmens (6) befindet, der die Verbindung zwischen einer äußeren Platte (4) und einer inneren Platte (5) des genannten stromaufwärtigen festen Teils (1) herstellt, dadurch gekennzeichnet, daß der Strömungsleitrand (108; 208) über verstellbare Mittel (116; 232), die ihm nur einen einzigen Freiheitsgrad belassen, mit dem vorderen Rahmen (6) der festen Struktur der Schubumkehrvorrichtung verbunden ist und daß ihm bewegliche und mit Gelenken versehene Verbindungsmittel (122-124; 237-241) zugeordnet sind, über die er mit dem Antriebszylinder (7a) für die Verstellung des beweglichen Teils der Schubumkehrvorrichtung verbunden ist.

2. Schubumkehrvorrichtung nach Anpruch 1, bei der der Strömungsleitrand (108) von wenigstens zwei beweglichen Halterungen (116) getragen wird, die jeweils gelenkig mit einer festen Halterung (119) verbunden sind, die ihrerseits mit dem vorderen Rahmen (6) des stromaufwärtigen festen Teils (1) der Schubumkehrvorrichtung fest verbunden ist.

3. Schubumkehrvorrichtung nach einem der Ansprüche 1 oder 2, bei der die mit Gelenken versehenen Verbindungsmittel wenigstens eine an dem Körper des Antriebszylinders (7a) für die Stellbewegungen des beweglichen Teils der Schubumkehrvorrichtung angelenkte Kurbelstange (123) und einen Hebel (125) umfassen, der mit einem Ende an der festen stromaufwärtigen Struktur (1) der Schubumkehrvorrichtung und mit dem anderen Ende an der Kurbelstange (123) angelenkt ist.

4. Schubumkehrvorrichtung nach Anpruch 3, bei der die Kurbelstange (123) an einem Ende eine Rolle (122) trägt, die mit einer an dem Strömungsleitrand angebrachten Nut (121) zusammenwirkt.

5. Schubumkehrvorrichtung nach einem der Ansprüche 1 bis 4, bei der der Strömungsleitrand (108) wenigstens ein treibendes Segment (108a) und wenigstens ein getriebenes Segment (108b) aufweist.

6. Schubumkehrvorrichtung nach Anpruch 5, bei der jedes getriebene Segment (108b) von wenigstens zwei beweglichen Halterungen (116) getragen ist, die jeweils an einer festen Halterung (119) angelenkt sind, die an dem vorderen Rahmen (6) des festen Teils (1) der Schubumkehrvorrichtung angelenkt und über einen an beiden Enden mit einem Gelenk versehenen Schwinghebel (129) mit einem auslegerartigen Element (131) verbunden ist, das mit einem benachbarten treibenden Element (108a) fest verbunden ist.

7. Schubumkehrvorrichtung nach Anpruch 1, bei der der Strömungsleitrand wenigstens zwei bewegliche Gleitschienen (232) aufweist, die jeweils mit einer festen Trägerführung (233) zusammenwirken, die mit dem stromaufwärtigen festen Teil (1) der Schubumkehrvorrichtung fest verbunden sind, wobei die Gleitschienen (232) in ihrem Endbereich einen Stützkragen (232a) für eine Feder (236) aufweisen, die zwischen dem Kragen (232a) und dem Endbereich der Trägerführung (233) angeordnet ist.

8. Schubumkehrvorrichtung nach Anpruch 7, bei der die mit Gelenken versehenen Verbindungsmittel wenigstens eine Kurbelstange (241) umfassen, die mit einem Ende an dem Körper des Antriebszylinders (7a) für die Stellbewegungen des beweglichen Teils der Schubumkehrvorrichtung angelenkt ist, sowie eine Nocke (238), die gelenkig auf einem mit dem stromaufwärtigen festen Teil (1) der Schubumkehrvorrichtung fest verbunden Zapfen (239) gelagert und fest mit einem Gelenk (240) verbunden ist, das mit dem anderen Ende der Kurbelstange (241) zusammenwirkt, wobei die bewegliche Nocke (238) mit einer mit dem Strömungsleitrand (208) fest verbundenen Nockenrolle (237) zusammenwirkt.

## Claims

1. Bypass turbojet engine thrust reverser comprising an upstream part (1) of which the radially inner part is prolonged towards the rear by a flow-diverting lip and a movable part comprising diverting obstacles, notably pivoting shutters (7) capable in the closed position of integrating themselves in the outer wall of the annular duct of the secondary flow and, in the deployed position, of diverting the said secondary flow, each shutter (7) being directly linked to a ram (7a) controlling its displacements, the said flow-diverting lip being situated permanently downstream of a front frame (6) forming the connection between an outer panel (4) and an inner panel (5) of the said fixed upstream part (1) characterised in that the said flow-diverting lip (108, 208) is connected to the said front frame (6) of the fixed structure of the thrust reverser by movable means (116: 232) which allow it a single degree of freedom and is associated with movable and articulated means of linkage (122-125 : 237-241) to the ram (7a) controlling the displacement of the movable part of the thrust reverser.

2. Thrust reverser in accordance with Claim 1 in which the said flow-diverting lip (108) is carried on at least two movable supports (116), each articulated on a fixed support (119) fixed to the front frame (6) of the fixed upstream part (1) of the thrust reverser.

3. Thrust reverser in accordance with either of Claims 1 or 2 in which the said articulated means of linkage comprise at least one link (123) articulated on the body of the ram (7a) controlling the displacements of the movable part of the thrust reverser and a lever (125) articulated at one end on the fixed upstream structure (1) of the thrust reverser and at the other end on the said link (123).

4. Thrust reverser in accordance with Claim 3 in which one end of the said link (123) carries an idler (122) working in conjunction with a slot (121) formed in the said flow-diverting lip.

5. Thrust reverser in accordance with any of Claims 1 to 4 in which the flow-diverting lip (108) comprises at least one driving segment (108a) and at least one driven segment (108b).

6. Thrust reverser in accordance with Claim 5 in which each driven segment (108b) is carried on at least two movable supports (116), each articulated on a fixed support (119) which is fixed to the front frame (6) of the fixed upstream part (1) of the thrust reverser and is connected by a link (129), articulated at each end, to an element taking the form of a bracket (131) fixed to an adjacent driving segment (108a).

7. Thrust reverser in accordance with Claim 1 in which the said flow-diverting lip comprises at least two movable slides (232) each working in conjunction with a fixed guide-support (233) fixed to the fixed upstream part (1) of the thrust reverser, the said slide (232) comprising at its end a retaining collar (232a) for a spring (236) interposed between the said collar (232a) and the end of the said guide-support (233).

8. Thrust reverser in accordance with Claim 7 in which the said articulated means of linkage comprise at least one link (241) at one end, articulated on the body of the ram (7a) controlling the displacements of the movable part of the thrust reverser and a cam (238) articulated on a pivot (239) fixed to the fixed upstream part (1) of the thrust reverser and fixed to an articulation (240) working in conjunction with the other end of the said link (241), the said movable cam (238) working in conjunction with an idler (237) fixed to the flow-diverting lip (208).

FIG:1

FIG : 2a

7

FIG : 2b

7

7a

7

FIG : 3

FIG : 4

FIG : 5

FIG : 7

FIG : 6

FIG : 8

FIG : 9

FIG : 10

FIG : 11